# EUROPÄISCHE PATENTSCHRIFT

(11) **EP 1 556 273 B1**
(45) Veröffentlichungstag und Bekanntmachung des Hinweises auf die Patenterteilung: **24.05.2006**
(21) Anmeldenummer: 03750602.9
(22) Anmeldetag: 23.09.2003
(51) Int. Cl.: B62D 39/00, B62D 21/15, B62D 27/00

(54) **KRAFTFAHRZEUG MIT FAHRGASTZELLE ALS SEPARATE BAUEINHEIT**
MOTOR VEHICLE COMPRISING A PASSENGER CELL IN THE FORM OF A SEPARATE UNIT
VEHICULE COMPORTANT UN HABITACLE SE PRESENTANT SOUS LA FORME D'UNITE SEPAREE

(30) Priorität: 29.10.2002 DE 10250290
(43) Veröffentlichungstag der Anmeldung: 27.07.2005
(73) Patentinhaber: DaimlerChrysler AG, 70567 Stuttgart (DE)
(72) Erfinder: Ellenrieder, Gunther, 73732 Esslingen (DE); Fussnegger, Wolfgang, 72074 Tübingen (DE); Manske, Jens, Minato-ku, Tokyo 106-850 (JP); Pfeiffer, Peter, 71034 Böblingen (DE)
(86) Internationale Anmeldenummer: PCT/EP2003/010556
(87) Internationale Veröffentlichungsnummer: WO 2004/039657

(56) Entgegenhaltungen:
- DE-A- 2 156 488
- DE-A- 2 326 646
- DE-A- 4 102 526
- GB-A- 1 042 390
- US-A- 5 251 911

## Beschreibung

Die Erfindung betrifft ein Kraftfahrzeug gemäß dem Oberbegriff des Patentanspruches 1.

Ein gattungsgemäßes Kraftfahrzeug ist aus der DE 41 02 526 A1 bekannt. Dort wird eine Vorrichtung beschrieben, die bei einem Frontalaufprall des Kraftfahrzeuges auf ein Hindernis in Funktion tritt und die Fahrgastzelle, welche als eine vom restlichen Fahrzeug abgekoppelte Baueinheit ausgebildet ist, an deren Vorderseite nach oben anhebt, so dass die Fahrgastzelle sich dort von der Auflage am restlichen Fahrzeug löst. Gleichzeitig wird ein motorgetriebener Seilzug in Gang gesetzt, der einenends an der Rückseite der Fahrgastzelle und anderenends an einer fahrzeugseitig im vorderen Bereich der Fahrgastzelle angebrachten Spule befestigt ist, an der Motor sein Drehmoment ausübt. Der Seilzug wird nun auf der Spule aufgerollt, wodurch die Fahrgastzelle, die im hinteren Bereich durch ein Rollen-Schienen-System am restlichen Fahrzeug geführt ist, um einen Drehpunkt gedreht wird. Die Fahrgastzelle ist in der Endlage vertikal aufgestellt, weist also mit seiner Vorderseite nach oben und ist somit dem unmittelbaren Crashbereich entzogen. Nachteilig ist bei diesem Fahrzeugkonzept jedoch, dass die Fahrgastzelle bei einem Frontalaufprall des Fahrzeuges zusätzlich zur Trägheitskraft der Fahrgastzelle durch die Zugkraft des Seilzuges in Aufprallrichtung besonders stark nach vorne beschleunigt wird, so dass die Fahrgastzelle schräg nach vorne über den Vorderwagen hinaus katapultiert wird. Falls der Crash dabei mit hohen Hindernissen, beispielsweise Bäumen, Mauern oder Nutzfahrzeugen stattfindet, ist mit einer besonders hohen Verletzungsgefahr für die Insassen der Fahrgastzelle zu rechnen.

Der Erfindung liegt die Aufgabe zugrunde, ein gattungsgemäßes Kraftfahrzeug dahingehend weiterzubilden, dass die Verletzungsgefahr für die Fahrzeuginsassen bei einem Crash verringert wird.

Die Aufgabe ist erfindungsgemäß durch die Merkmale des Patentanspruches 1 gelöst.

Durch die Bewegung der Fahrgastzelle entgegen der Aufprallrichtung im Falle eines Aufpralles wird eine zusätzliche Crashlänge erzielt, auf der kinetische Aufprallenergie absorbiert werden kann ohne die Fahrgastzelle dabei in Mitleidenschaft zu ziehen. Die Fahrzeuginsassen erfahren zwar keinen weicheren Stoss, jedoch bleibt die Fahrgastzelle auf der erwähnten Crashlänge auch vor Intrusionen unversehrt. Hierdurch wird die Verletzungsgefahr für die Insassen erheblich reduziert. Aufgrund der erzielten hohen Steigerung der Crashsicherheit der Fahrgastzelle können andere an dieser gewöhnlich angewandte aufwendige Sicherheitsvorkehrungen wie beispielsweise zusätzliche Versteifungen oder Knautschzonen reduziert werden oder gar entfallen ohne dass die Sicherheit der Insassen davon gefährdet werden würde. Infolge dessen werden leichtere Bauweisen der Fahrgastzelle und damit des gesamten Fahrzeuges ermöglicht. Dabei wäre der Einsatz einer Fahrgastzelle aus formstabilem Kunststoff denkbar.

Zweckmäßige Ausgestaltungen der Erfindung können den Unteransprüchen entnommen werden; im übrigen ist die Erfindung anhand mehrerer in den Zeichnungen dargestellter Ausführungsbeispieles nachfolgend näher erläutert; dabei zeigt:
- Fig. 1: in einer perspektivischen Ansicht ein erfindungsgemäßes Kraftfahrzeug mit einer Fahrgastzelle in Einbaulage,
- Fig. 2: in einer perspektivischen Ansicht das erfindungsgemäße Kraftfahrzeug aus Fig. 1 mit einer Fahrgastzelle bei Frontalaufprall,
- Fig. 3: in einer perspektivischen Ansicht eine die Fahrgastzelle umgebende restliche Kraftfahrzeugkarosserie mit einer erfindungsgemäßen Vorrichtung zum Verschieben der Fahrgastzelle,
- Fig. 4: in einer perspektivischen Ansicht in einem Ausschnitt eine die Fahrgastzelle umgebende Kraftfahrzeugkarosserie eines erfindungsgemäßen Kraftfahrzeuges mit einem längenveränderlichen Längsträger.

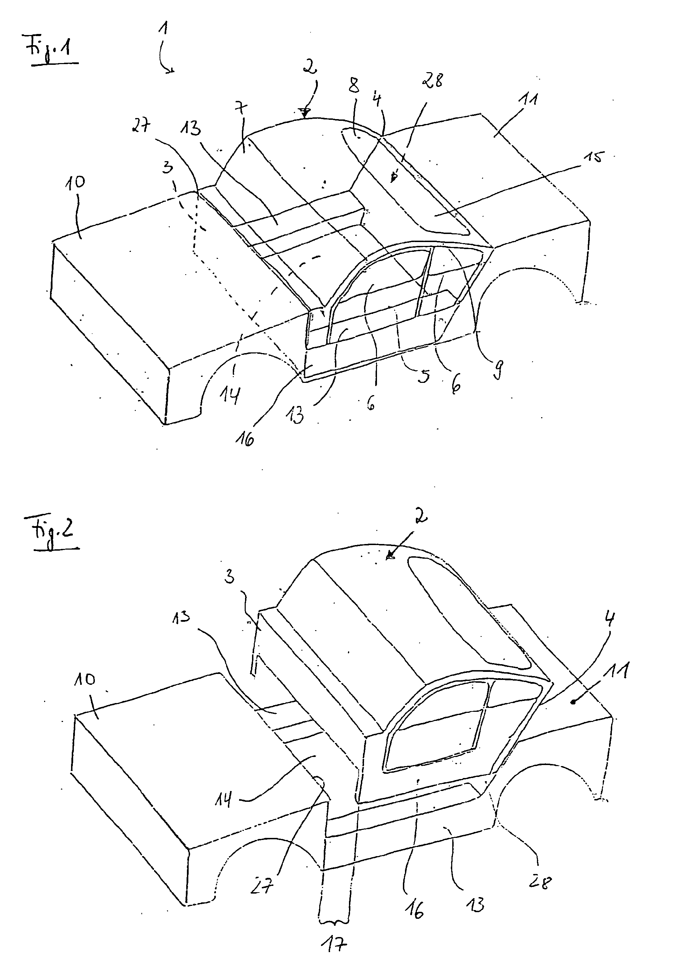

In Fig. 1 ist ein Kraftfahrzeug 1 dargestellt, dessen Fahrgastzelle 2 als separate Baueinheit in das restliche Fahrzeug integriert ist. Die Fahrgastzelle 2 umfasst dabei eine vordere Spritzwand 3 und eine hintere Rückwand 4 sowie Türen 5 mit Fenstern 6, eine Windschutzscheibe 7, ein Heckfenster 8 und einen komplette Dachstruktur 9. Das restliche Fahrzeug beinhaltet einen Vorderwagen 10 mit einer Antriebseinheit für das Kraftfahrzeug 1 und einen Hinterwagen 11 mit einem Kofferraum, welche miteinander durch zwei seitliche Längsträger 13 verbunden sind, wobei die Strecke der Längsträger 13 zwischen dem Vorder- und dem Hinterwagen 10,11 den Schwellerbereich des Kraftfahrzeuges 1 bilden.

Der Vorderwagen 10 und der Hinterwagen 11 bilden mit den Längsträgern 13, die Teil einer im wesentlichen unterhalb der Fahrgastzelle 2 befindlichen Fahrzeugstruktur sind, eine Mulde 14 aus, die sich zum Vorderwagen 10 mit einer vertikal verlaufenden Wandung 27 und zum Hinterwagen 11 in Form einer Wandung 28 mit schräg verlaufender Führungsfläche 15, die dem Vorderwagen 10 zugewandt ist, anschließt. Die Form dieser Anschlüsse sind in diesem Ausführungsbeispiel eigens für einen Frontalaufprall konzipiert. Alternativ ist zum einen anstatt der stufenförmigen Wandung 27 ebenfalls eine Wandung mit schräg verlaufender Führungsfläche denkbar, die dem Hinterwagen 11 zugewandt ist, wodurch die Erfindung in vorteilhafter Weise auch bei einem Heckaufprall beispielsweise bei einem Auffahrunfall Verwendung finden kann. Zum anderen kann die besagte schräge Führungsfläche 15 auch nur vorderwagenseitig allein zum Zwecke der Sicherheit bei Auffahrunfällen angeordnet sein.

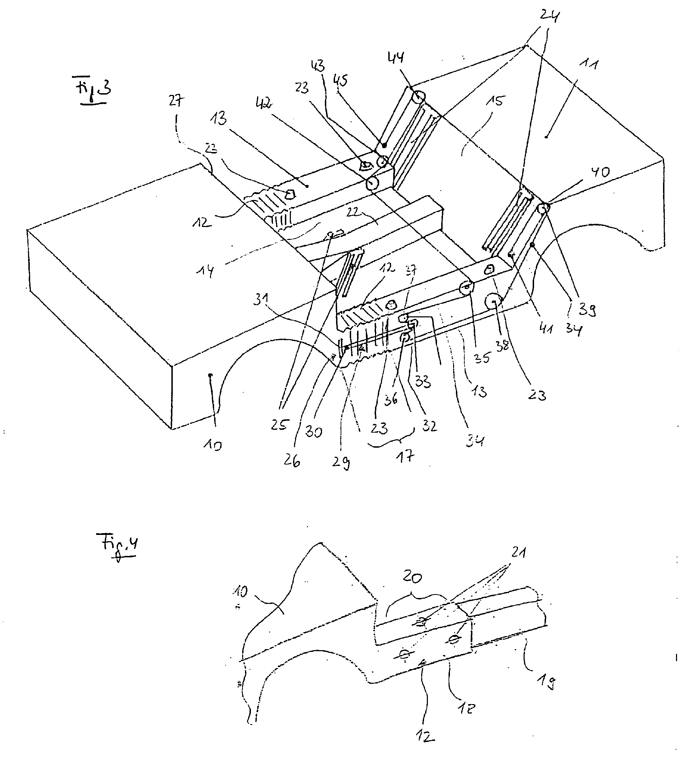

Die Fahrgastzelle 2 ist in die Mulde 14 eingepasst, wobei die Fahrgastzelle 2 auf den Längsträgern 13 aufsitzt und diese nach außen mit einer Schürze 16 abdeckt. Mittels dieser Schürze 16 wird bei einer aufprallbedingten Verschiebung eine stabile Längsführung der Fahrgastzelle 2 entlang der Längsträger 13 erzielt (Fig. 2). Der Verlauf der hinteren Rückwand 4 und der vorderen Spritzwand 3 der Fahrgastzelle 2 sind entsprechend den Anschlussformen des Vorderwagens 10 und des Hinterwagens 11 ausgebildet. Die Fahrgastzelle 2 ist unter normalen Betriebsbedingungen am restlichen Fahrzeug, beispielsweise am Vorder- und Hinterwagen 10,11 mit Befestigungsmitteln sicher fixiert. Diese können derart gestaltet sein, dass sie sich bei Übersteigen eines definierten einwirkenden Kraftmomentes lösen beispielsweise durch Entriegelung, oder mit Sollbruchstellen versehen sein, an denen die feste Verbindung zwischen Fahrgastzelle 2 und dem restlichen Fahrzeug ab dem besagten Kraftmoment abreißt, so dass diese relativ zum restlichen Fahrzeug bewegbar ist.

Des weiteren können an dem restlichen Fahrzeug, insbesondere auf den Längsträgern 13 elastische Lager, vorzugsweise Gummilager 23 (Fig. 3) angeordnet sein, auf denen die Fahrgastzelle 2 aufliegt, wodurch die Insassen der Fahrgastzelle 2 eine Komfortverbesserung des Fahrgefühls erfahren, die aus der mit dem Gummilager verbundenen Schwingungsabkoppelung von Motorvibrationen und von durch Fahrbahnunebenheiten induzierten Schwingungen resultiert. Das restliche Fahrzeug kann in montagetechnisch einfacher Weise aus einzelnen Modulen bestehen, nämlich einem Vorderwagenmodul, einem Hinterwagenmodul, und Längsträgermodulen.

Das Kraftfahrzeug 1 beinhaltet des weiteren eine Vorrichtung zum Bewegen der Fahrgastzelle 2 in Fahrzeuglängsrichtung relativ zum restlichen Fahrzeug. Kommt es nun während des Fahrbetriebes zu einem Frontalaufprall, wird die Vorrichtung zeitgleich oder kurze Zeit vorher vermittels Crashsensoren aktiviert. Durch die Vorrichtung wird dann die Fahrgastzelle 2 über die Führungsfläche 15 des Hinterwagens 11 in Aufprallgegenrichtung nach hinten und gleichzeitig nach oben bewegt, wobei die Befestigungsmittel durch die Bewegung gelöst werden bzw. brechen. Die Befestigungsmittel können auch sensorgestützt gesteuert, insbesondere schon vor dem Aufprall gelöst werden. Bei der Bewegung der Fahrgastzelle 2 nach hinten und oben wird diese um einen Zusatzcrashweg 17 von der Wandung 27 des Vorderwagens 10 beabstandet, wodurch das Kraftfahrzeug 1 wesentlich mehr Aufprallenergie absorbieren kann als bei bisher bekannten Crashsystemen ohne dass die Fahrgastzelle 2 Schaden nimmt. Hierbei spielt der Anschrägungswinkel der Führungsfläche 15 eine große Rolle. Je niedriger dieser ist, desto größer ist der verfügbare Zusatzcrashweg 17, wobei kleine Winkel einen besonders hohen Sicherheitskomfort für die Insassen der Fahrgastzelle 2 erbringen. Bei der Realisierung des erfindungsgemäßen Fahrzeuges 1 muss jedoch die Auslegung des Anschrägungswinkels an die Länge des Hinterwagens 11 und damit an die Gesamtlänge des Fahrzeuges 1 und die Dimensionierung des Kofferraumes angepasst werden, was die Beliebigkeit der Winkelwahl einschränkt. Besonders günstig wirkt sich die Erfindung bei Kraftfahrzeugen 1 aus, deren Fahrgastzelle 2 völlig autark ist, d.h. wenn Lenkung und Bremse elektrisch betätigt werden und keine mechanische Anbindungen aus der Fahrgastzelle 2 heraus an das Fahrwerk bestehen, da dadurch die Fahrgastzelle 2 völlig ungehindert nach hinten oben bewegt werden kann.

Auf dem Zusatzcrashweg 17 weist die Fahrzeugstruktur einen in Fahrzeuglängsrichtung zusammenschiebbaren Abschnitt 12 auf, der hier einen Teil der Längsträger 13 im Schwellerbereich darstellt, wie es in Fig. 3 und 4 verdeutlicht ist. Der Abschnitt 12 kann gemäß Fig. 3 ziehharmonikaartig gefaltet sein, wobei er in Fahrzeugquerrichtung ausgeknickt ist. Dadurch steht im Crashfalle ein weiterer zusätzlicher Verformungsweg zur Verfügung, wobei die Verformung gezielt eingeleitet werden kann, so dass sich das Kraftfahrzeug 1 auf diesem Abschnitt 12 in definierter Richtung zusammenschieben lässt. Durch diese Maßnahme erfahren die Insassen der Fahrgastzelle 2 einen weicheren Stoß beim Aufprall, wobei gleichzeitig Aufprallenergie verbraucht wird.

Alternativ dazu können nach Fig. 4 die Längsträger 13 auch aus mehreren Bauteilen 18 und 19 bestehen, wobei die ersten Bauteile 18 hohl ausgebildet sind und die zweiten Bauteile 19 unter Bildung einer überlappenden Zone 20 und unter Freilassung eines Leerweges, über den die zweiten Bauteile 19 in den ersten Bauteilen 18 im Crashfall relativ längsverschiebbar sind, umgreifen. In einfacher Weise sind die Bauteile 18 und 19 ineinander gesteckt und entlang der Überlappungszone 20 mit im Crash abscherbaren Verbindungsmitteln 21, beispielsweise durch Schrauben aneinander befestigt. Im Crashfall brechen die Verbindungsmittel 21, so dass die beiden Längsträgerteile 18 und 19 ineinander teleskopieren. Hierdurch wird ebenfalls zum einen Aufprallenergie abgebaut und zum anderen der Stoss weicher gestaltet. Dieser besonders energieabsorbierend gestaltete Abschnitt 12, wie er in Fig. 3 und Fig. 4 beispielhaft dargestellt ist, kann auch an einem Mitteltunnel 22 (Fig. 3) der Fahrzeugstruktur ausgebildet sein.

Die Vorrichtung, mittels derer die Fahrgastzelle 2 in Aufprallgegenrichtung bewegt werden kann, kann in mehreren Varianten ausgeführt sein. Beispielsweise kann die Vorrichtung einen Crashsensor und eine oder mehrere Druckfedern beinhalten, die sich einerseits an einer Stirnwand der Fahrgastzelle 2 beispielsweise der vorderen Spritzwand 3 und andererseits an einem am restlichen Fahrzeug ausgebildeten Anschlag, der in diesem Fall von der flächigen Wandung 27 am Vorderwagen 10 gebildet ist, abstützen. Die Fahrgastzelle 2 ist am restlichen Fahrzeug arretiert, wobei der Crashsensor nach Detektion eines Aufpralles oder eines kurz bevorstehenden Crashs die Arretierung aufhebt. Anstelle der Druckfedern können auch Zugfedern Verwendung finden, die sich dann allerdings einenends am Hinterwagen 11 und anderenends an der hinteren Rückwand 4 der Fahrgastzelle abstützen. Wird im Crashfall die von einer Verriegelung gebildete Arretierung der Fahrgastzelle 2 aufgehoben, entspannen sich die unter Vorspannung stehenden Druck- bzw. Zugfedern, worauf die Fahrgastzelle 2 von diesen entlang der Führungsfläche 15 nach hinten oben gedrückt bzw. gezogen wird.

Denkbar in einer weiteren Variante der Vorrichtung ist, dass die Vorrichtung einen Crashsensor und eine pyrotechnische Einrichtung beinhaltet, die zwischen der der Aufprallrichtung zugewandten Stirnwand (vordere Spritzwand 3) der Fahrgastzelle 2 und einer gegenüberliegenden Wandung, hier die flächige stufenförmige Wandung 27 des Vorderwagens 10, des restlichen Fahrzeuges angeordnet ist. Nach Detektion eines Aufpralles oder eines kurz bevorstehenden Aufpralles steuert der Crashsensor einen Zünder der Einrichtung mittels eines elektrischen Signals an, worauf über die Pyrotechnik ein explosionsartiger Druck freigesetzt wird, der die Fahrgastzelle 2 binnen kürzester Zeit nach hinten oben schiebt. Bei den vorstehend beschriebenen Varianten ist es für eine möglichst ungehinderte Verschiebung der Fahrgastzelle 2 entgegen des Aufpralles und somit für die Gewährleistung einer einwandfreien Funktion der erfindungsgemäßen Vorrichtung sehr zuträglich, wenn die Führungsfläche 15 in einem Winkel angeschrägt ist, der höchstens 45° beträgt.

Auf den Führungsflächen 15 sind zur verbesserten Führung parallel zueinander verlaufende Laufschienen 24 angeordnet, entlang derer die Fahrgastzelle 2 richtungsdefiniert geführt ist, so dass bei einem Crash keine unkontrollierte Verschiebebewegung der Fahrgastzelle 2 auftritt. Die Laufschienen 24 können geradlinig verlaufende Nuten sein, die in die Führungsflächen 15 eingearbeitet sind, wobei an der Spritzwand 3 oder der Rückwand 4 Stege oder mehrere Stifte angeordnet sind, die in die Nuten eingreifen. Alternativ können die Laufschienen 24 selbst Stege darstellen, die in an der Fahrgastzelle 2 ausgebildete Rillen oder Nuten mit Spiel eingepasst sind. Um den Führungskomfort zu erhöhen und zur Wahrung einer stabilen Horizontallage der Fahrgastzelle 2 sind zusätzlich an der Fahrzeugstruktur, in diesem Ausführungsbeispiel am Mitteltunnel 22 in Vorderwagennähe ebenfalls Laufschienen 25 ausgebildet, die mit entsprechenden Führungsmitteln am Boden der Fahrgastzelle 2 zusammenwirken. Aufgrund der vorne und hinten und links und rechts an der Fahrgastzelle 2 angeordneten Führungen, die alle zueinander parallel und schräg nach oben der Aufprallrichtung zugewandt sind, wird bei einem Fahrzeugaufprall die gesamte Fahrgastzelle 2 in einer gleichmäßigen Parallelverschiebung nach oben hinten bewegt, so dass Kippbewegungen, die den Sitzkomfort der Insassen beeinträchtigen und eventuell zu Gesundheitsgefährdungen führen, verhindert werden. Im übrigen kann die Fahrgastzelle 2 montagefreundlich über die Schienenführung exakt in die Mulde 14 eingefahren und dort platziert werden, wonach die Fahrgastzelle 2 in der Einbaustellung durch Verriegelung fixiert wird.

Alternativ zu den oben beschriebenen Varianten der Pyrotechnik und des Federantriebes zeigt in Fig. 3 die Vorrichtung zum Bewegen der Fahrgastzelle 2 ein Schiebeelement 29, das längs der Fahrzeuglängsrichtung angeordnet und von der Prallkraft eines Fahrzeugcrashs in Fahrzeuglängsrichtung betätigbar ist. Das starre Schiebeelement 29 ist einenends mit der Fahrgastzelle 2 über den gesamten Crashweg hinweg verbunden und trägt anderenends eine Prallaufnahme 26, die am Vorderwagen 10 oder der unteren Fahrzeugstruktur fahrzeugfest angebracht ist. Hierdurch ohne sensortechnischen Aufwand in einfacher Weise die Prallenergie selbst ausgenutzt, um die Fahrgastzelle 2 nach oben hinten zu bewegen. Dabei wird zusätzlich Crashenergie verbraucht. Um eine möglichst gleichmäßige Krafteinleitung zu erreichen, ist es sinnvoll, mehrere parallel zueinander angeordnete in Aufprallrichtung bündig miteinander abschließende Schiebeelemente 29 vorzusehen. Die Schiebeelemente 29 sollten so am Vorderwagen 10 oder an der unterhalb der Fahrgastzelle 2 befindlichen Fahrzeugstruktur befestigt sein, dass die Schiebeelemente 29 in Fahrzeuglängsrichtung relativ zu dem zusammenschiebbaren Abschnitt 12 der Fahrzeugstruktur beweglich sind, d.h. die Schiebeelemente 29 dürfen keinen unmittelbaren Kontakt zum Abschnitt 12 besitzen. Damit wird erreicht, dass die Fahrgastzelle 2 über den von dem Abschnitt 12 erbrachten Zusatzcrashweg 17 hinweg möglichst ungehindert nach hinten bewegt werden kann. Für einen Heckcrash kann natürlich ein oder mehrere Schiebeelemente 29 auch am Hinterwagen 11 angebracht sein. Es ist für eine kontinuierliche und möglichst weitgreifende Bewegung der Fahrgastzelle 2 auch denkbar, im Falle einer Anbringung der Schiebeelemente 29 am Vorder- oder Hinterwagen 10,11 deren an die unterhalb der Fahrgastzelle 2 liegende Fahrzeugstruktur und die Spritzwände 3,4 der Fahrgastzelle 2 angrenzenden Wandungen 27,28 derart ausgebildet sind, dass im Crashfall die Struktur die Wandungen 27,28 durchdringt, wobei bei dieser Variante die Längsträger 13 nur zwischen dem Vorder- und dem Hinterwagen 10,11 verlaufen. Das Schiebeelement 29 ist konstruktiv als Schubstange 30 mit einer Betätigungsplatte 31 ausgebildet, wobei diese die Prallaufnahme 26 bildet.

Die Prallaufnahme 26 kann auch der Fahrgastzelle 2 derart vorgelagert sein, dass sie über den Vorderwagen 10 in Längsrichtung hinausragt. Hierbei sollte die Prallaufnahme 26 nicht am Vorderwagen 10 oder an der unteren Fahrzeugstruktur befestigt und die Schubstange 30 lediglich am Vorderwagen 10 oder an der unteren Fahrzeugstruktur geführt sein, so dass die Schubstange 30 mit der Betätigungsplatte 31 Relativbewegungen zum Vorderwagen 10 und zur unteren Fahrzeugstruktur in Fahrzeuglängsrichtung ausführen kann. Dadurch wird die Fahrgastzelle 2 schon vor dem Aufprall des Vorderwagens 10 selbsttätig zurückgeschoben, wodurch der Zusatzcrashweg 17 frühzeitig frei und die Fahrgastzelle 2 vor Intrusionen besonders geschützt wird. Hierbei wird die durch das Zurückfahren der Fahrgastzelle 2 auftretende zusätzliche negative Beschleunigung auf die Insassen auf einen anderen Zeitpunkt verlegt als die nachfolgende crashbedingte negative Beschleunigung, so dass die Insassen nicht so hohen Körperbelastungen ausgesetzt sind wie bei zeitgleichen sich addierenden Negativbeschleunigungen. Aufgrund der Vorlagerung der Prallaufnahme 26 und der daraus resultierenden vorzeitigen Freilegung des Zusatzcrashweges 17 ist es möglich, ganz auf die zusammenschiebbare Gestaltung des Abschnitte 12 zu verzichten, was den Herstellungsaufwand des Fahrzeuges 1 erheblich verringert ohne dass größere Verluste in der Crashsicherheit die Folge sind.

Im Ausführungsbeispiel der Fig. 3 weist ein an der linken Seite des Kraftfahrzeuges 1 angeordnetes Schiebeelement 29 am der Prallaufnahme 26 gegenüberliegenden Ende 32 eine drehbare Umlenkrolle 33 auf, die in einen Seilzug 34 eingreift. Der Seilzug wird über die am Längsträger 13 drehbar befestigten Umlenkrollen 35,36,37,38 auf der linken Fahrzeugseite zum einen zu einer Umlenkrolle 39, die an der oberen Kante 40 der Führungsfläche 15 des Hinterwagens 11 drehbar befestigt ist. Das dortige Ende 41 des Seilzuges 34 ist an der linken Seite der hinteren Rückwand 4 der Fahrgastzelle 2 angebracht. Zum anderen wird der Seilzug 34 oberhalb des Mitteltunnels 22 über die Umlenkrolle 35 zur rechten Fahrzeugseite auf eine Umlenkrolle 42 am dortigen Längsträger 13 und von dort aus zuerst zu einer ebenfalls am rechten Längsträger 13 befestigten Umlenkrolle 43 und schließlich zu einer Umlenkrolle 44 geführt, die an der rechten Seite der Führungsfläche 15 des Hinterwagens 11 angebracht ist. Das Ende 45 des Seilzuges 34 ist an der linken Seite der hinteren Rückwand 4 der Fahrgastzelle 2 befestigt. Im Falle eines Crashs wird das Schiebeelement 29 relativ zur Fahrgastzelle 2 in Längsrichtung verschoben und dabei in den Seilzug 34 gedrückt, welcher aufgrund der dabei stattfindenden Verkürzung der restlichen Seillänge die Fahrgastzelle 2 unter Zugbeanspruchung in Richtung des Hinterwagens 11 setzt. Durch das Wegziehen der Fahrgastzelle 2 vom Aufprallbereich entlang der Führungsflächen 15 nach oben wird die Gefahr von Intrusionen der starren Schiebeelemente 29 in die Fahrgastzelle 2, die eventuell bei einer direkten Anbringung der Schiebeelemente 29 an der vorderen Spritzwand 3 der Fahrgastzelle 2 besteht, grundsätzlich vermieden. Durch den beidseitigen gleichstark wirkenden Zug wird die Fahrgastzelle 2 gleichmäßig und verklemmfrei entlang den Laufschienen 24 der Führungsfläche 15 bewegt. Die Seilzugvariante bietet weiterhin den Vorteil, dass die Bewegung der Fahrgastzelle 2 an der Führungsfläche 15 entlang praktisch unabhängig von dem Anschrägungswinkel ist und trotzdem ungehindert erfolgen kann. Dadurch wird eine größere Variationsmöglichkeit in der Fahrzeugkonzeption erreicht.

Alternativ ist es auch denkbar, dass zu beiden Seiten des Fahrzeuges 1 je ein Seilzug 34 angeordnet ist, wobei jeweils beide Enden des Seilzuges 34 an der linken bzw. rechten Seite der hinteren Rückwand 4 der Fahrgastzelle angebracht ist. Dadurch ist gewährleistet, dass die Fahrgastzelle 2 auch dann noch gezogen werden kann, wenn ein Seilzug 34 unter den Crashbedingungen reißt. Des weiteren entfällt eine Querführung des Seilzugs 34 von einer Fahrzeuglängsseite zur anderen, welche Querführung für die Längsbewegung der Fahrgastzelle 2 hinderlich sein kann.

## Patentansprüche

1. Kraftfahrzeug, dessen Fahrgastzelle als separate Baueinheit in das restliche Fahrzeug integriert ist, mit einer Vorrichtung, mittels derer die Fahrgastzelle im Crashfall über Führungsflächen, die am restlichen Fahrzeug angeordnet sind und an denen die Fahrgastzelle anliegt, relativ zum restlichen Fahrzeug in Fahrzeuglängsrichtung und gleichzeitig nach oben bewegbar ist,
**dadurch gekennzeichnet ,**
**dass** die Vorrichtung derart gestaltet ist, dass die gesamte Fahrgastzelle (2) in Aufprallgegenrichtung rein translatorisch bewegbar ist.

2. Kraftfahrzeug nach Anspruch 1,
**dadurch gekennzeichnet ,**
**dass** die Vorrichtung zumindest ein längs der Fahrzeuglängsrichtung angeordnetes von der Prallkraft in Fahrzeuglängsrichtung betätigbares Schiebeelement (29) beinhaltet, das einenends mit der Fahrgastzelle (2) über den gesamten Crashweg hinweg verbunden ist und anderenends eine Prallaufnahme (26) trägt.

3. Kraftfahrzeug nach Anspruch 2,
**dadurch gekennzeichnet ,**
**dass** das Schiebeelement (29) an einer im wesentlichen unterhalb der Fahrgastzelle (2) befindlichen Fahrzeugstruktur befestigt ist, die einen in Fahrzeuglängsrichtung zusammenschiebbaren relativ zum Schiebeelement (29) beweglichen Abschnitt (12) aufweist.

4. Kraftfahrzeug nach Anspruch 3,
**dadurch gekennzeichnet ,**
**dass** der Abschnitt (12) Teil eines Längsträgers (13) der Fahrzeugstruktur ist, auf dem die Fahrgastzelle (2) aufliegt.

5. Kraftfahrzeug nach einem der Ansprüche 3 oder 4,
**dadurch gekennzeichnet ,**
**dass** der Abschnitt (12) ziehharmonikaartig gefaltet ist, wobei er in Fahrzeugquerrichtung ausgeknickt ist.

6. Kraftfahrzeug nach einem der Ansprüche 3 oder 4,
**dadurch gekennzeichnet ,**
**dass** die Fahrzeugstruktur aus ersten (18) und zweiten Bauteilen (19) besteht, wobei die ersten Bauteile (18) hohl ausgebildet sind und die zweiten unter Bildung einer überlappenden Zone (20) und unter Freilassung eines Leerweges, über den die zweiten Bauteile (19) in den ersten Bauteilen (18) im Crashfall verschiebbar sind, umgreifen, und dass die zweiten Bauteile (19) mit den ersten Bauteilen (18) in der Zone (20) aneinander durch eine im Crash abscherbare Verbindung befestigt sind.

7. Kraftfahrzeug nach Anspruch 2,
**dadurch gekennzeichnet ,**
**dass** das Schiebeelement (29) am Vorder- oder/und Hinterwagen (10,11) angebracht ist, und dass die unterhalb der Fahrgastzelle (2) liegende Fahrzeugstruktur und die angrenzenden Wandungen (27,28) des Vorder- oder Hinterwagens (10,11) derart ausgebildet sind, dass im Crashfall die Struktur die Wandungen (27,28) durchdringt.

8. Kraftfahrzeug nach einem der Ansprüche 1 bis 7,
**dadurch gekennzeichnet ,**
**dass** die Prallaufnahme (26) des Schiebeelementes (29) der Fahrgastzelle (2) vorgelagert ist.

9. Kraftfahrzeug nach einem der Ansprüche 2 bis 8,
**dadurch gekennzeichnet ,**
**dass** das Schiebeelement (29) mit einem Seilzug (34), der an der Fahrgastzelle (2) befestigt ist und über am restlichen Fahrzeug angeordneten Umlenkrollen (35-39,42-44) geführt ist, derart in Wirkverbindung steht, dass die Fahrgastzelle (2) mittels des Seilzuges (34) bei einer crashbedingten Relativverschiebung des Schiebeelementes (29) zur Fahrgastzelle (2) entlang der Führungsflächen (15) nach oben in Aufprallgegenrichtung gezogen wird.

10. Kraftfahrzeug nach Anspruch 9,
**dadurch gekennzeichnet ,**
**dass** der Seilzug (34) von einer Fahrzeuglängsseite zur anderen verläuft, wobei die beiden Enden (41,45) des Seilzuges (34) auf unterschiedlichen Fahrzeugslängsseiten an der Fahrgastzelle (2) angebracht sind.

11. Kraftfahrzeug nach einem der Ansprüche 1 bis 10,
**dadurch gekennzeichnet ,**
**dass** die Fahrgastzelle (2) auf den Führungsflächen (15) vorne und hinten aufliegt, die zueinander parallel und schräg nach oben der Aufprallrichtung zugewandt sind.

12. Kraftfahrzeug nach Anspruch 1,
**dadurch gekennzeichnet ,**
**dass** die Vorrichtung einen Crashsensor und eine Druck-oder Zugfeder beinhaltet, die sich einerseits an einer Spritzwand (3) oder Rückwand (4) der Fahrgastzelle (2) und andererseits an einem am restlichen Fahrzeug ausgebildeten Anschlag abstützt, und dass die Fahrgastzelle (2) am restlichen Fahrzeug arretiert ist, wobei der Crashsensor nach Detektion eines Aufpralles die Arretierung aufhebt.

13. Kraftfahrzeug nach Anspruch 1,
**dadurch gekennzeichnet ,**
**dass** die Vorrichtung einen Crashsensor und eine pyrotechnische Einrichtung beinhaltet, die zwischen einer der Aufprallrichtung zugewandten Spritzwand (3) oder Rückwand (4) der Fahrgastzelle (2) und einer gegenüberliegenden Wandung (27,28) des restlichen Fahrzeuges angeordnet ist, wobei der Crashsensor nach Detektion eines Aufpralles einen Zünder der Einrichtung mittels eines elektrischen Signals ansteuert, der einen explosionsartigen Druck freisetzt.

14. Kraftfahrzeug nach einem der Ansprüche 1 bis 13,
**dadurch gekennzeichnet ,**
**dass** die Fahrgastzelle (2) auf Gummilagern (23) aufliegt, die an dem restlichen Fahrzeug angeordnet sind.

## Claims

1. Motor vehicle, the passenger cell of which is integrated into the rest of the vehicle as a separate unit, having a device, by means of which, in the event of a crash, the passenger cell can be moved in the longitudinal direction of the vehicle relative to the rest of the vehicle and at the same time upwards, via guide surfaces, which are arranged on the rest of the vehicle and against which the passenger cell bears, **characterized in that** the device is designed in such a manner that the entire passenger cell (2) can be moved in the opposite direction to the impact in a purely translatory manner.

2. Motor vehicle according to Claim 1, **characterized in that** the device contains at least one sliding element (29), which is arranged along the longitudinal direction of the vehicle, can be actuated in the longitudinal direction of the vehicle by the impact force and is connected at one end to the passenger cell (2) over the entire crash path and at the other end bears an impact receptacle (26).

3. Motor vehicle according to Claim 2, **characterized in that** the sliding element (29) is fastened to a vehicle structure, which is situated essentially below the passenger cell (2) and has a section (12) which can be pushed together in the longitudinal direction of the vehicle and is moveable relative to the sliding element (29).

4. Motor vehicle according to Claim 3, **characterized in that** the section (12) is part of a longitudinal member (13) of the vehicle structure, on which the passenger cell (2) rests.

5. Motor vehicle according to either of Claims 3 and 4, **characterized in that** the section (12) is folded in the manner of a concertina, with it buckling in the transverse direction of the vehicle.

6. Motor vehicle according to either of Claims 3 and 4, **characterized in that** the vehicle structure comprises first components (18) and second components (19), the first components (18) being of hollow design and engaging around the second, with an overlapping zone (20) being formed and with an empty distance being left free, over which the second components (19) can be displaced in the first components (18) in the event of a crash, and **in that** the second components (19) with the first components (18) are fastened to one another in the zone (20) by a connection which can be sheared off in the crash.

7. Motor vehicle according to Claim 2, **characterized in that** the sliding element (29) is fitted to the front end and/or rear end (10, 11), and **in that** the vehicle structure situated below the passenger cell (2) and the adjacent walls (27, 28) of the front end or rear end (10, 11) are designed in such a manner that, in the event of a crash, the structure penetrates the walls (27, 28).

8. Motor vehicle according to one of Claims 1 to 7, **characterized in that** the impact receptacle (26) of the sliding element (29) is mounted upstream of the passenger cell (2).

9. Motor vehicle according to one of Claims 2 to 8, **characterized in that** the sliding element (29) is operatively connected to a cable pull (34), which is fastened to the passenger cell (2) and is guided via deflection pulleys (35-39, 42-44) arranged on the rest of the vehicle, in such a manner that the passenger cell (2) is pulled upwards by means of the cable pull (34) along the guide surfaces (15) in the opposite direction to the impact during a crash-induced displacement of the sliding element (29) relative to the passenger cell (2).

10. Motor vehicle according to Claim 9, **characterized in that** the cable pull (34) runs from one longitudinal side of the vehicle to the other, with the two ends (41, 45) of the cable pull (34) being fitted on the passenger cell (2) on different longitudinal sides of the vehicle.

11. Motor vehicle according to one of Claims 1 to 10, **characterized in that** the passenger cell (2) rests at the front and rear on the guide surfaces (15) which are parallel to one another and face obliquely upwards to the impact direction.

12. Motor vehicle according to Claim 1, **characterized in that** the device contains a crash sensor and a compression or tension spring which is supported, on the one hand, on a splash wall (3) or back wall (4) of the passenger cell (2) and, on the other hand, on a stop formed on the rest of the vehicle, and **in that** the passenger cell (2) is locked to the rest of the vehicle, with the crash sensor cancelling the locking after detection of an impact.

13. Motor vehicle according to Claim 1, **characterized in that** the device contains a crash sensor and a pyrotechnic device which is arranged between a splash wall (3), which faces the impact direction, or back wall (4) of the passenger cell (2) and an opposite wall (27, 28) of the rest of the vehicle, the crash sensor, after detection of an impact, using an electric signal to activate an igniter of the device that releases an explosive pressure.

14. Motor vehicle according to one of Claims 1 to 13, **characterized in that** the passenger cell (2) rests on rubber bearings (23) which are arranged on the rest of the vehicle.

## Revendications

1. Véhicule dont l'habitacle est intégré sous forme de module séparé dans le reste du véhicule, avec un dispositif à l'aide duquel, en cas de collision, l'habitacle est déplaçable dans la direction longitudinale du véhicule par rapport au reste du véhicule et, en même temps, vers le haut par l'intermédiaire de surfaces de guidage qui sont disposées sur le reste du véhicule et sur lesquelles s'appuie l'habitacle, **caractérisé en ce que** le dispositif est configuré de telle manière que l'ensemble de l'habitacle (2) est déplaçable uniquement en translation dans le sens inverse de la collision.

2. Véhicule selon la revendication 1, **caractérisé en ce que** le dispositif comprend au moins un élément coulissant (29) disposé le long de la direction longitudinale du véhicule et actionnable par la force d'impact dans la direction longitudinale du véhicule qui est relié, à une extrémité, à l'habitacle (2) sur toute la course de collision et qui porte un absorbeur de choc (26) à l'autre extrémité.

3. Véhicule selon la revendication 2, **caractérisé en ce que** l'élément coulissant (29) est fixé à une structure du véhicule se trouvant essentiellement en dessous de l'habitacle (2) qui comporte un segment (12) télescopique dans la direction longitudinale du véhicule et déplaçable par rapport à l'élément coulissant (29).

4. Véhicule selon la revendication 3, **caractérisé en ce que** le segment (12) fait partie d'un longeron (13) de la structure du véhicule sur lequel est posé l'habitacle (2).

5. Véhicule selon l'une quelconque des revendications 3 ou 4, **caractérisé en ce que** le segment (12) est plié en forme d'accordéon et il est recourbé dans la direction perpendiculaire du véhicule.

6. Véhicule selon l'une quelconque des revendications 3 ou 4, **caractérisé en ce que** la structure du véhicule est constituée de premiers (18) et de deuxièmes (19) éléments de construction, les premiers éléments de construction (18) ayant une configuration creuse et entourent les deuxièmes éléments de construction en formant une zone de chevauchement (20) et en laissant libre une course à vide sur laquelle les deuxièmes (19) éléments de construction peuvent coulisser dans les premiers (18) éléments de construction en cas de collision, et **en ce que** les deuxièmes (19) éléments de construction sont fixés au premiers (18) éléments de construction dans la zone (20) à l'aide d'une connexion cisaillable pendant la collision.

7. Véhicule selon la revendication 2, **caractérisé en ce que** l'élément coulissant (29) est monté sur l'avant-train et/ou sur l'arrière-train (10, 11) et **en ce que** la structure du véhicule se trouvant-en dessous de l'habitacle (2) et les parois adjacentes (27, 28) de l'avant-train ou de l'arrière-train (10, 11) sont configurées de telle manière que la structure pénètre à travers les parois (27, 28) en cas de collision.

8. Véhicule selon l'une quelconque des revendications 1 à 7, **caractérisé en ce que** l'absorbeur de choc (26) de l'élément coulissant (29) est logé devant l'habitacle (2).

9. Véhicule selon l'une quelconque des revendications 2 à 8, **caractérisé en ce que** l'élément coulissant (29) est en communication active avec un câble de transmission (34) qui est fixé sur l'habitacle (2) et qui est guidé par des rouleaux déflecteurs (35-39, 42-44) disposés dans le reste du véhicule de telle manière que l'habitacle (2) est tiré par le câble de transmission (34) le long des surfaces de guidage (15) vers le haut dans le sens inverse de la collision lors d'un déplacement relatif de l'élément coulissant (29) vers l'habitacle (2) provoqué par une collision.

10. Véhicule selon la revendication 9, **caractérisé en ce que** le câble de transmission (34) s'étend entre un grand côté du véhicule et l'autre, les deux extrémités (41, 45) du câble de transmission (34) étant montées sur l'habitacle (2) sur des grands côtés différents du véhicule.

11. Véhicule selon l'une quelconque des revendications 1 à 10, **caractérisé en ce que** l'habitacle (2) s'appuie devant et derrière sur les surfaces de guidage (15) qui sont parallèles les unes aux autres et dirigées en biais vers le haut dans le sens de collision.

12. Véhicule selon la revendication 1, **caractérisé en ce que** le dispositif comprend un détecteur d'impact et un ressort de pression ou de traction qui s'appuie, d'une part, sur une paroi de projection (3) ou paroi arrière (4) de l'habitacle (2) et, d'autre part, sur une butée formée dans le reste du véhicule et **en ce que** l'habitacle (2) est bloqué dans le reste du véhicule, le détecteur d'impact annulant le blocage après la détection d'une collision.

13. Véhicule selon la revendication 1, **caractérisé en ce que** le dispositif comprend un détecteur d'impact et un dispositif pyrotechnique qui est placé entre une paroi de projection (3) ou paroi arrière (4) de l'habitacle (2) tournée vers le sens de collision et une paroi opposée (27, 28) du reste du véhicule, le détecteur d'impact commandant un allumeur du dispositif à l'aide d'un signal électrique après la détection d'une collision, qui libère une pression sous forme d'explosion.

14. Véhicule selon l'une quelconque des revendications 1 à 13, **caractérisé en ce que** l'habitacle (2) s'appuie sur des paliers en caoutchouc (23) qui sont montés dans le reste du véhicule.
